# FASCICULE DE BREVET EUROPEEN

(11) **EP 1 876 902 B1**
(45) Date de publication et mention de la délivrance du brevet: **25.05.2011**
(21) Numéro de dépôt: 06743739.2
(22) Date de dépôt: 25.04.2006
(51) Int. Cl.: A21C 5/00, A21C 11/10

(54) **MACHINE A FORMER DES PATONS**
MASCHINE ZUM FORMEN VON TEIGSTÜCKEN
MACHINE FOR SHAPING DOUGH PIECES

(30) Priorité: 27.04.2005 FR 0504245; 17.02.2006 FR 0601396
(43) Date de publication de la demande: 16.01.2008
(73) Titulaire: BONGARD (S.A.), F-67810 Holtzheim (FR)
(72) Inventeur: GUINARD, Jean-Yves, F-45130 Meung sur Loire (FR); REGNIER, Denis, F-45130 Meung sur Loire (FR); GERBER, Yves, F-67810 Holtzheim (FR); BEZET, André, F-18140 Sancergues (FR)
(74) Mandataire: Littolff, Denis
(86) Numéro de dépôt international: PCT/FR2006/000921
(87) Numéro de publication internationale: WO 2006/114518

(56) Documents cités:
- DE-A1- 3 911 782
- DE-A1- 19 529 281
- DE-C- 62 273
- DE-C1- 3 608 331
- FR-A- 935 714
- FR-A- 1 312 602
- FR-A- 1 320 045
- FR-A- 2 516 749
- FR-A- 2 838 296
- US-A- 1 765 285
- US-A- 1 847 150
- US-A- 3 324 809
- US-A- 3 363 589
- US-A1- 2004 013 770

## Description

La présente invention concerne une machine à former des pâtons à partir d'une masse de pâte poussée, en vue de la fabrication par exemple de baguettes de pain.

Actuellement, pour fabriquer des baguettes, un boulanger commence par mettre sa pâte dans un bac, avant de la transférer dans une diviseuse qui la sectionne en des pâtons de volume sensiblement égal, voir par exemple US 1 847 150 A. Ces pâtons, boulés à la main, sont ensuite déposés dans les balancelles d'un repose-pâtons.

La nécessité de laisser reposer les pâtons à ce stade provient notamment du dégazage subi par la pâte lors du sectionnement en pâtons, précédé d'une phase de compression du volume de pâte. Le temps de repos vise dès lors à restaurer au moins partiellement la texture gazeuse interne de la pâte nécessaire à la fabrication du pain.

Les pâtons reposés sont ensuite façonnés dans une façonneuse qui leur donne une forme oblongue allongée proche de la forme terminale des baguettes. En sortie de la façonneuse, qui les soumet également à un traitement mécanique susceptible de modifier leur volume et donc leur structure gazeuse, les pâtons oblongs reposent à nouveau plusieurs heures dans une chambre de fermentation avant leur mise au four pour la cuisson.

L'ensemble de ces opérations prend beaucoup de temps, notamment parce que nombre d'entre elles sont des opérations manuelles. Par ailleurs, la nature même de certaines des étapes et des contraintes mécaniques qu'elles entraînent impose comme on l'a vu de les faire suivre par des temps de repos de la pâte, ce qui allonge d'autant la durée totale de la fabrication des baguettes.

La présente invention vise à remédier aux inconvénients de l'art antérieur en proposant une machine à former des pâtons à partir d'un bloc de pâte poussée, par exemple pour la fabrication de baguettes de pain, telle qu'à leur sortie de ladite machine, les pâtons peuvent être introduits directement dans le four pour la cuisson finale.

Il n'est plus nécessaire de prévoir de boulage, de façonnage, ni même de phases de repos intermédiaires, de sorte que le temps de fabrication à partir de la fourniture de la pâte jusqu'à l'introduction dans le four est considérablement écourté.

A cet effet, la machine à fabriquer des pâtons de l'invention comporte classiquement un bac de réception d'une masse de pâte poussée, un ensemble d'outils mobiles entre plusieurs positions pour l'activation des différents outils en vue de les appliquer séquentiellement à la pâte, le bac et l'ensemble d'outils étant animés d'un mouvement relatif permettant respectivement de les rapprocher / écarter.

Elle se caractérise à titre principal en ce que l'ensemble d'outils comporte :
- des moyens d'étalement contrôlés de la pâte dans le bac visant à uniformiser son épaisseur en préservant sensiblement son volume initial ;
- des moyens de formage / individualisation de la pâte en des pâtons distincts, dotés de cloisons séparatrices définissant entre elles des logements pour le formage des pâtons lors du déplacement relatif bloc d'outils / bac dans le sens du rapprochement aboutissant à entrainer les cloisons vers le fond du bac, la forme desdites cloisons séparatrices dans chaque logement étant prévue pour étirer progressivement une couche surfacique supérieure de la pâte et refouler le reste de pâte à l'intérieur de ladite couche surfacique qui se referme à mesure que les cloisons s'approchent du fond du bac, l'individualisation complète des pâtons s'effectuant lors du contact des cloisons séparatrices avec le fond du bac.

La machine de l'invention procède d'une logique tout à fait différente de celle qui est à la base des procédés habituels de fabrication de pain. A titre essentiel, il n'existe plus d'étape de division de la pâte, telle que réalisée par sectionnement dans des diviseuses classiques après tassage de la pâte.

Le dégazage qui résulte d'un tel tassage aboutit à détruire au moins partiellement la structure alvéolaire de la pâte, certaines des alvéoles restantes étant ensuite à nouveau supprimées au cours du sectionnement provenant de la division en pâtons. Or, l'existence et la qualité de l'alvéolage présentent un intérêt considérable dans la fabrication du pain.

Un pain issu d'une pâte correctement alvéolée a un meilleur goût, présente un aspect et une texture beaucoup plus agréables, et offre une meilleure tenue dans le temps, aussi bien en atmosphère sèche et qu'en atmosphère humide. Ainsi, lorsque l'air ambiant est sec, ce type de pain rassit beaucoup plus lentement. A l'inverse, l'humidité d'un air ayant un taux d'hygrométrie élevé est mieux absorbée et conduit à une texture moins spongieuse du pain qui s'y trouve.

En fait, les pains ainsi produits ressemblent aux pains de tradition réalisés par les artisans boulangers : la préservation des alvéoles dans la pâte revêt donc un intérêt tout à fait fondamental.

En termes de productivité, la machine de l'invention est d'un intérêt indéniable dans la mesure où elle permet une réduction du nombre de tâches à effectuer par le boulanger qui est de l'ordre de 40%. Concrètement, ramené au temps de fabrication d'une baguette, la réduction temporelle est de l'ordre de 25%. Cette machine permet au surplus d'économiser de la surface au sol dans le fournil, ainsi que de la main-d'oeuvre, dont le coût représente un pourcentage notoirement important dans le prix final du pain.

Selon une configuration possible, les moyens d'étalement contrôlés de la pâte consistent en une plaque de pression plane destinée à exercer une pression uniforme sur la pâte disposée dans le bac, associée à des moyens de détection d'une contre-pression appliquée à la plaque de pression lors de son déplacement relatif par rapport au bac, les moyens de détection de la contre-pression provoquant l'arrêt du déplacement lorsqu'un seuil prédéterminé de contre-pression est atteint.

En pratique, lorsqu'apparaît une contre-pression, on arrête le déplacement de la plaque de pression ou du bac avant que la pâte ne soit tassée et subisse un dégazage provoqué par la compression et induisant une réduction du volume.

Comme cela a été mentionné auparavant, on s'est aperçu que si on prend bien soin de ne pas diminuer le volume total de pâte initialement déposé dans le bac, et donc si l'on se contente simplement d'uniformiser la pâte sans la tasser, il est possible de faire l'économie des phases de repos. En omettant cette opération de tassage de la pâte dans le bac, il n'y a pratiquement pas d'expulsion de gaz, notamment de gaz carbonique inclus dans la pâte et formée sous l'effet de la levure. C'est la raison pour laquelle il n'est plus nécessaire de laisser reposer les pâtons, le repos ayant précisément pour but de permettre à la levure de reformer à nouveau du gaz carbonique en vue de la cuisson.

De préférence, le déplacement relatif bac / plaque est obtenu au moyen d'un moteur électrique, les moyens de détection consistant alors en la mesure du couple du moteur électrique, le déplacement étant arrêté lorsque le couple moteur subit une augmentation.

Il est à noter que les deux moyens principaux de l'invention, à savoir d'une part les moyens de réaliser un étalement contrôlé, et d'autre part les moyens de formage / individualisation sans sectionnement (donc sans porter atteinte aux alvéoles de la pâte), ont finalement le même but : préserver la structure alvéolaire, donc conserver le gaz à l'intérieur du volume au cours des différentes étapes du traitement.

Selon une possibilité propre à l'invention, les moyens de formage / individualisation consistent en fait en des cloisons séparatrices parallèles dépassant d'une plaque et régulièrement espacés, à portion terminale formant un bourrelet à section en forme de goutte.

Une telle forme des parois séparatrices permet l'obtention de pâtons ayant directement la forme d'une baguette de pain, et qui peuvent par conséquent être envoyés au four sans façonnage ni temps de repos, leur intégrité structurelle ayant été respectée.

Plus précisément, les cloisons séparatrices parallèles peuvent comporter une base d'allure parallélépipédique reliée par des surfaces arrondies concaves à une paroi centrale d'allure plus mince que la base se terminant par un bourrelet à section en goutte. Les deux faces en regard de deux cloisons adjacentes délimitent alors un logement présentant l'ébauche de la forme oblongue d'un pâton destiné à produire une baguette de pain.

L'extrémité libre du bourrelet à section en goutte peut ensuite être dotée d'une arête de séparation des pâtons. Plus précisément, ladite arête peut provenir d'une lame solidarisée à l'extrémité libre dudit bourrelet.

Cette lame, qui termine en fait la séparation des pâtons par contact avec le fond du bac, intervient lorsque l'opération de formage est pratiquement terminée, et n'a pas d'influence sur les alvéoles des pâtons, puisqu'elle agit dans une portion mince de liaison entre deux pâtons adjacents en phase finale de préformage, en pratique à l'extérieur de la couche surfacique quasi refermée et délimitant les pâtons.

De préférence, les moyens d'étalement contrôlés de la pâte et les moyens de formage / individualisation des pâtons sont situés sur deux côtés d'un même bloc d'outils. Ledit bloc d'outils est alors par exemple prévu mobile en rotation au-dessus du bac de réception de la pâte.

Il est dès lors possible de procéder séquentiellement à l'étalement contrôlé de la pâte, dans un premier temps, et ensuite au formage / individualisation des pâtons.

De préférence, c'est le bac de réception qui est prévu mobile en translation entre une première position à distance de l'ensemble d'outils et une seconde position d'interaction avec celui-ci.

La machine de l'invention met ensuite en oeuvre, entre deux étapes d'interaction, une rotation du bloc d'outils de façon à mettre en regard du bac la face munie des outils de l'étape à venir. Le bac est alors remonté au contact de la plaque d'outil sélectionnée, et l'opération correspondant à l'étape à mettre en oeuvre a lieu.

Selon une possibilité additionnelle, le fond du bac est amovible. Cette caractéristique est avantageuse dans la mesure où un plateau supportant les pâtons peut ainsi être facilement extrait de la machine de l'invention, de manière à pouvoir disposer ensuite facilement les pâtons sur des tapis de fours en vue de leur enfournage puis de leur cuisson.

La machine de l'invention comporte de préférence un carter de protection muni d'une fenêtre donnant accès au bac de réception de la pâte, ladite fenêtre étant obturable par un volet.

Afin d'éviter tout risque d'accidents, l'utilisateur n'a pas accès à l'intérieur de la machine lorsque celle-ci est en cours de fonctionnement. Les mesures de sécurité sont encore renforcées par le fait que le volet coopère avec un contact électrique de sécurité dont la position fermée correspond à la position d'obturation de la fenêtre par le volet, et qui autorise l'activation des moyens d'entraînement de l'ensemble d'outils d'une part, et du déplacement relatif bac / ensemble d'outils d'autre part.

Ainsi, l'étalement de la pâte et la séparation en pâtons individualisés ne peuvent être effectués que si le volet est fermé, ce qui empêche toute intervention intempestive de l'utilisateur au cours du fonctionnement.

L'invention concerne également un procédé de fabrication de pâtons en vue de leur cuisson directe dans un four pour obtenir du pain.

Ce procédé, mis en oeuvre à l'aide d'une machine telle qu'elle a été décrite auparavant, se caractérise à titre principal en ce qu'il comprend les étapes suivantes :
- positionnement de l'ensemble d'outils de sorte que les moyens d'étalement contrôlés d'une masse de pâte poussée disposée dans le bac de réception soient au-dessus et en face du bac ;
- application d'une pression contrôlée sur la masse de pâte par déplacement relatif bac / ensemble d'outils en vue de les rapprocher, de manière à l'étaler en uniformisant son épaisseur tout en maintenant sensiblement constant son volume ;
- déplacement inverse en vue de séparer l'ensemble d'outils du bac ;
- mise en mouvement de l'ensemble d'outils de sorte que les moyens de formage / individualisation soient amenés au-dessus et en face du bac ;
- déplacement relatif ensemble d'outils / bac de sorte que les moyens de formage / individualisation des pâtons puissent être appliqués à la pâte préalablement étalée ;
- déplacement inverse en vue de séparer l'ensemble d'outils du bac.

En fait, l'application de la pression s'effectue comme mentionné ci-dessus par contrôle de l'existence d'une contre-pression exercée par la pâte, et arrêt des moyens d'étalement contrôlés dès détection d'une contre-pression.

Plus précisément, comme évoqué dans le cadre de la machine, le procédé de l'invention utilise un bac entraîné par un moteur électrique vers une plaque de pression, ledit moteur étant arrêté dès détection d'une augmentation du couple moteur.

Il convient de souligner que, outre les avantages notamment économiques précités de la machine de l'invention, les questions d'hygiène et de santé ont été également constamment prises en compte dans sa conception. La machine est en effet conçue comme étanche à la poussière de farine. Comme elle remplace par ailleurs, dans un fournil de boulanger, un certain nombre d'opérations manuelles et de machines distinctes, nécessitant des transferts à l'air libre et des mouvements d'ouvertures/fermetures de machines, il en résulte un taux d'émission de farine dans le fournil qui est de l'ordre de 10% du taux d'émission que l'on trouve dans un fournil traditionnel. Il y a donc une réduction d'environ 90% des farines en suspension dans l'air du fournil, ce qui est considérable.

Or, 40% des maladies professionnelles des boulangers procèdent de processus allergiques à la farine, comme par exemple des formes d'asthme spécifiques, etc... La machine et le procédé de l'invention sont donc également particulièrement avantageux sur le plan de la santé.

L'invention va à présent être décrite plus en détail, en référence aux figures annexées, pour lesquelles :

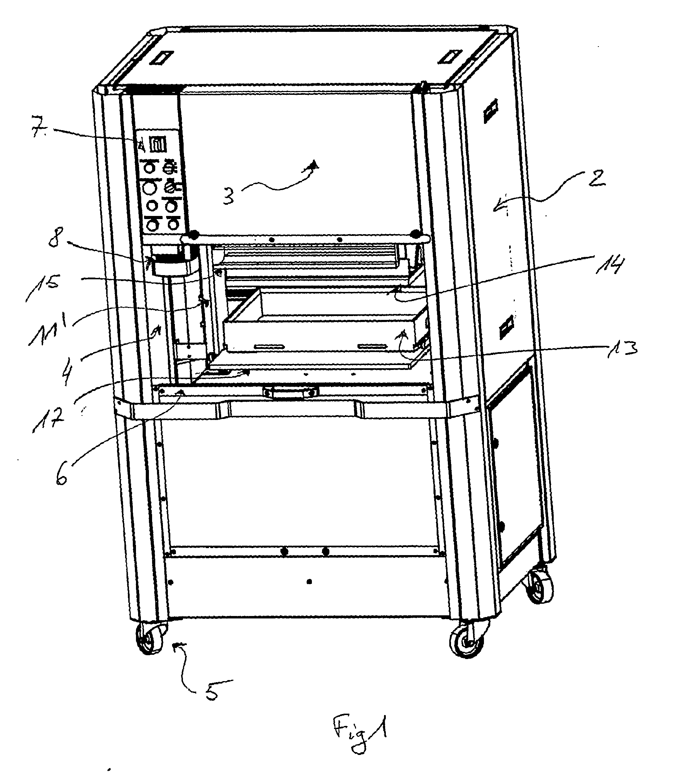

- la figure 1 est une vue en perspective de la machine ;
- la figure 2 représente, en perspective agrandie, une vue du bâti de la machine sans le carter de protection ;
- la figure 3 montre une vue en perspective du bloc d'outils fixé dans une portion du bâti ;
- la figure 4 est une vue en perspective du bac de réception de la pâte et de ses moyens d'entraînement ;
- la figure 5 montre, en coupe, les moyens de formage / individualisation des pâtons, avec un agrandissement de ceux-ci ;
- la figure 6 représente, en coupe, le fond du bac de réception avec les pâtons individualisés ; et
- les figures 7 et 8 montrent de manière schématique l'action des moyens d'étalement contrôlés de la pâte.

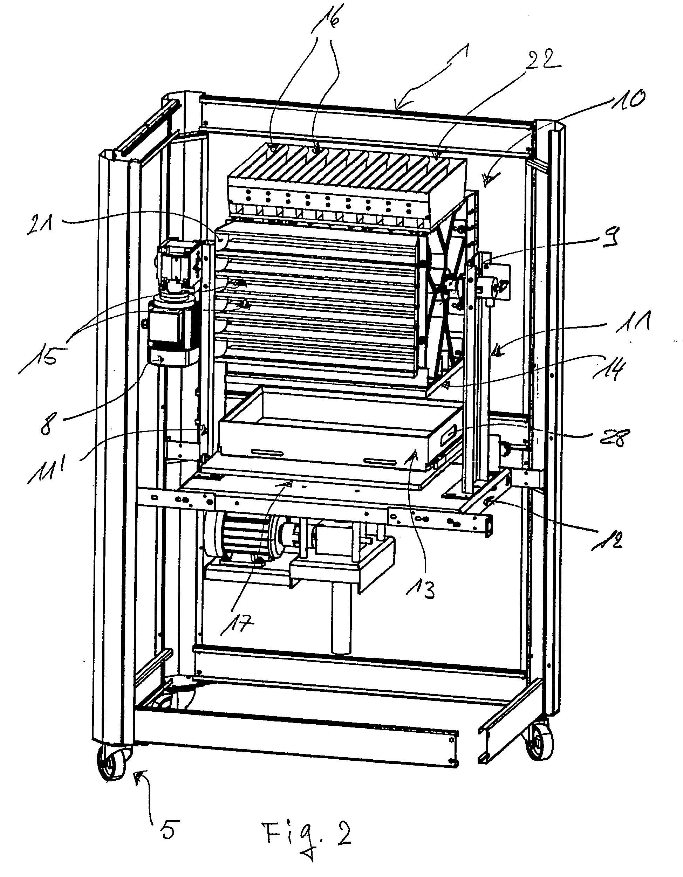

La machine représentée aux figures comprend un bâti (1) supporté par des roulettes (5), et dont l'ensemble est masqué par un carter (2). Une paroi de façade (3) est percée d'une fenêtre (4) obturable par un volet mobile (6). Au voisinage de ladite fenêtre (4), il est prévu un tableau de commande (7). Le bâti (1) supporte un premier moteur (8) (voir figure 2) entraînant via un réducteur un arbre (9) supportant un bloc d'outils (10). L'arbre rotatif (9) est disposé libre en rotation sur deux montants (11, 11') fixés à une plate-forme (12) solidaire du bâti (1).

Le bloc d'outils (10) présente, sur ses côtés visibles, des outils aux fonctionnalités distinctes. Ainsi, en partie inférieure, et positionnée en face du bac (13) de réception de la pâte, une plaque de pression (14) est prévue pour l'étalement contrôlé de la pâte disposée dans ledit bac (13).

Sur les deux autres côtés visibles du bloc d'outils (10), des cloisons de formage / individualisation respectivement longitudinale (15) et transversale (16) permettent la constitution des pâtons, en l'espèce pour la formation de baguettes de pain de deux longueurs différentes.

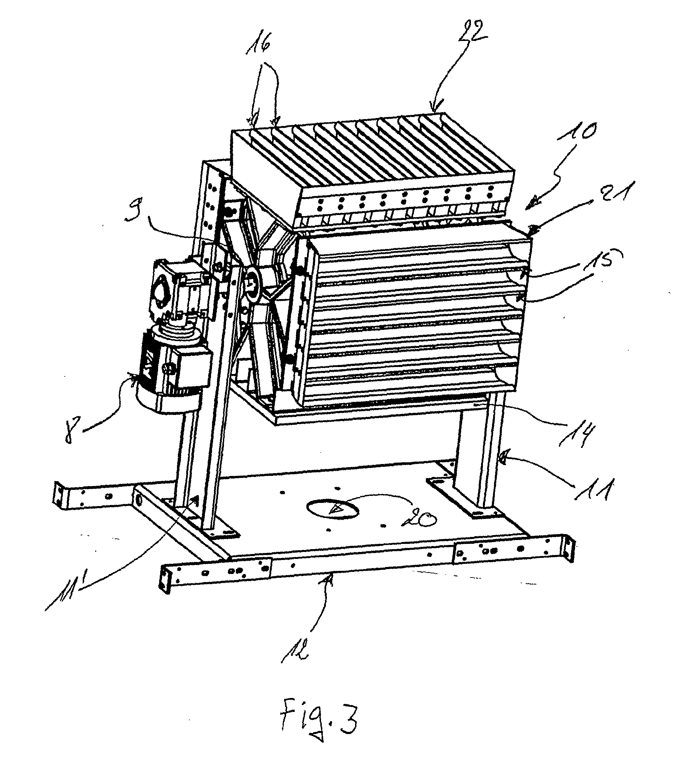

Chaque pâton de forme oblongue allongée est constitué entre deux cloisons (15, 16) adjacentes d'un même côté. Le bloc d'outils (10) apparaît de manière plus détaillée en figure 3.

Lorsque la pâte a été étalée de manière contrôlée par la plaque de pression (14), le bloc d'outils (10) pivote de 90° ou 180°, afin de présenter une face de formage / individualisation en regard de la pâte disposée dans le bac (13).

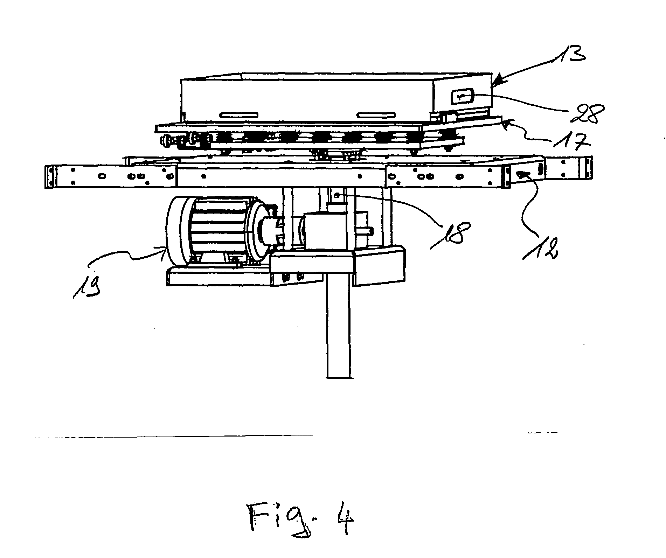

Le bac (13) est placé sur un plateau (17) (voir figure 4) mû en translation par un arbre (18) entraîné par le moteur (19). L'arbre support (18) passe au travers d'un orifice (20) pratiqué dans la plate-forme (12). Après rotation du bloc d'outils (10) de telle sorte que la face sélectionnée se trouve au-dessus et en regard du bac (13), ce dernier est entraîné vers le haut par le moteur (19) jusqu'à ce qu'il y ait interaction entre les outils et la pâte.

Les extrémités libres des cloisons séparatrices (15, 16) devant aller au contact du fond du bac (13), les cadres périphériques (21, 22) délimitant lesdites cloisons (15, 16) sont dimensionnés de sorte à pouvoir s'insérer dans ledit bac (13), qui réalise par conséquent un guidage de l'outil pendant l'interaction.

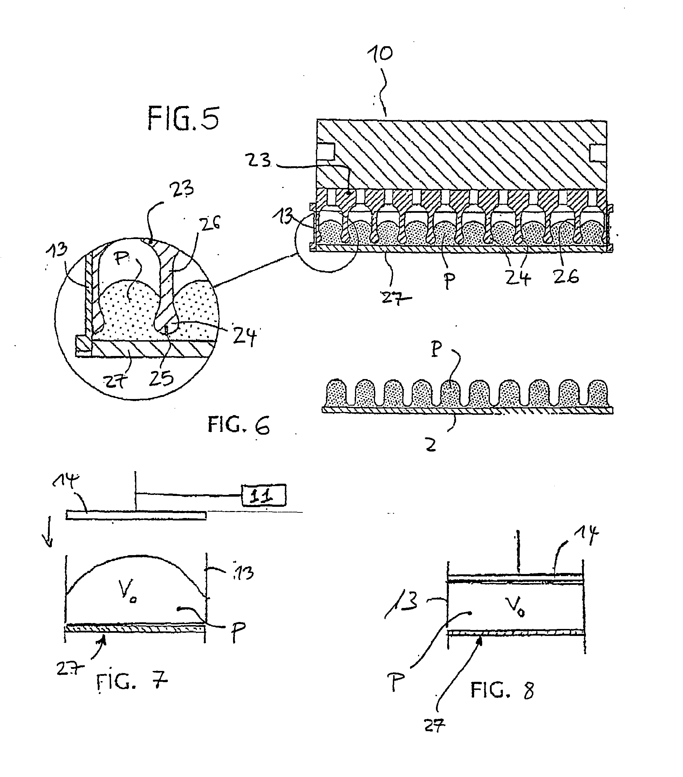

Le fonctionnement, pour les deux types d'outils (14;15,16), apparaît particulièrement bien aux figures 5 à 8. Ainsi, c'est l'outil de formage / individualisation transversal apparaissant en haut du bloc d'outils (10) en figures 2 et 3 qui apparaît en figure 5.

Lorsque la pâte (P) disposée dans le bac (13) subit l'application de la plaque de pression (14), comme cela est montré en figures 7 et 8, elle se répartit à l'intérieur de ce bac (13) tout en conservant sensiblement son volume V₀. Lorsqu'elle est étalée, le bac (13) est entraîné vers le bas par le moteur (19) de manière à l'écarter du bloc d'outils (10). Celui-ci pivote ensuite de 180° sous l'action du moteur (8), de manière à amener les cloisons séparatrices (16) disposées dans le cadre (22) en regard du bac (13). Lesdites cloisons séparatrices (16) sont montrées agrandies : elles comportent une base (23) d'allure parallélépipédique, et un bourrelet d'extrémité (24) à section en goutte d'eau à l'intérieur de laquelle est solidarisée une lame (25). La base (23) et le bourrelet terminal (24) sont reliés par une partie (26) de moindre épaisseur.

Le bac (13) remonte progressivement, à l'encontre des cloisons séparatrices (16), jusqu'à ce que la lame d'extrémité (25) arrive en contact avec le fond amovible (27) du bac (13). Dans cette hypothèse, la forme particulière donnée aux cloisons réalise un formage et une quasi individualisation des pâtons qui apparaît en figure 6. Ces pâtons sont ensuite complètement individualisés lorsque la lame (25) entre en contact avec le fond (27).

Lorsque les pâtons sont formés, le bac (13) est à nouveau entraîné en translation vers le bas par le moteur (19). Il peut ensuite être extrait de la machine, après ouverture du volet (6), à l'aide de poignées latérales (28) qui apparaissent notamment en figure 4. Le bac de réception (13) est ensuite par exemple placé sur une servante munie de moyens pour désolidariser le fond (27) du cadre périphérique du bac (13). Ledit fond (27) peut ensuite être éventuellement séparé de la servante, de manière à rendre la manipulation des pâtons allongés, en vue de leur positionnement sur les tapis d'enfournement, la plus facile possible. Ces pâtons sont ensuite enfournés, après avoir subi un lamage.

Ainsi qu'évoqué auparavant, pour que le fonctionnement de la plaque de pression (14) puisse s'effectuer correctement, il est prévu un détecteur de couple qui contrôle la valeur du couple du moteur (19). Lors de la remontée du bac (13), la valeur du couple est faible (hors démarrage, qui peut nécessiter un certain couple). Lorsque la plaque de pression (14) arrive au contact de la pâte (P), celle-ci se déforme pour s'uniformiser. Pendant le début de cette déformation, la pâte (P) n'exerce pas de contre-pression sur la plaque (14). Sous l'action de la pression de la plaque (14), la pâte a en effet au départ tendance à s'écarter et à s'étaler, et non pas à s'opposer au déplacement de la plaque (14). Il n'y a donc pas d'effort de réaction sensible sur la plaque (14).Une fois que la pâte est aplanie et uniformisée, comme cela est montré en figure 8, la pâte (P) tend en revanche à se comprimer si le bac (13) poursuit sa remontée. Il apparaît alors une contre-pression, détectée par une augmentation du couple du moteur (19). Le système de commande du moteur (19) coupe alors le déplacement du bac (13), ce qui stoppe le mouvement relatif plaque (14) / bac (13).

Le volume fermé délimité par le bac (13) et la plaque (14) reste alors en pratique sensiblement égal au volume V₀ de pâte (P) initialement disposée dans le bac (13). La pâte ne s'est pas comprimée et n'a donc pas perdu le gaz carbonique formé par la levure au cours du temps de poussée.

Après arrêt du bac (13), le moteur (19) est automatiquement commandé pour le déplacement de la plaque (17) dans le sens inverse jusqu'à la position d'attente, position à laquelle le moteur est le cas échéant commandé afin que le bloc d'outils (10) soit pivotée, en l'occurrence de 180°, afin que les parois de formage / individualisation (16) soient tournées en regard de la pâte (P).

Il n'y a pas plus de dégazage après intervention des cloisons séparatrices (15, 16). Les pâtons oblongs produits, ayant pratiquement déjà la forme de baguettes, peuvent donc être enfournés immédiatement, sans qu'il y ait nécessité de les laisser reposer.

Comme indiqué, la commande de tous les déplacements ne peut se faire que lorsque le volet (6) est obturé, et qu'on appuie sur un bouton de commande du tableau de commande (7).

Le volet (6) actionne par exemple un contact de fin de course (non représenté) dont la fermeture permet la mise en fonctionnement de l'ensemble, c'est-à-dire en réalité l'activation des boutons de commande, alors que l'ouverture de ce contact de fin de course signifie que le volet (6) n'est pas fermé, et que le fonctionnement de la machine n'est dès lors pas autorisé.

L'invention n'est évidemment pas limitée au mode de réalisation qui vient d'être décrit et représenté. On pourra y apporter de nombreuses modifications de détails sans sortir pour cela du cadre de l'invention.

## Revendications

1. Machine à former les pâtons à partir d'une masse de pâte (P) poussée placée dans un bac de réception (13), comportant un ensemble d'outils (10) mobiles entre plusieurs positions pour l'activation des différents outils en vue de les appliquer séquentiellement à la pâte (P), le bac (13) et l'ensemble d'outils (10) étant animés d'un mouvement relatif visant respectivement à les rapprocher / écarter,
**caractérisée en ce que** l'ensemble d'outils (10) comporte :
- des moyens d'étalement contrôlés (14) de la pâte (P) dans le bac (13) visant à uniformiser son épaisseur tout en préservant sensiblement son volume initial;
- des moyens de formage / individualisation de la pâte (P) en des pâtons distincts, dotés de cloisons séparatrices (15, 16) définissant entre elles des logements pour le formage des pâtons lors du déplacement relatif bloc d'outils (10) / bac (13) dans le sens du rapprochement aboutissant à entraîner les cloisons (15, 16) vers le fond du bac (13), la forme desdites cloisons séparatrices (15, 16) dans chaque logement étant prévue pour étirer progressivement une couche surfacique supérieure de la pâte (P) et refouler le reste de pâte à l'intérieur de ladite couche qui se referme à mesure que les cloisons (15, 16) s'approchent du fond (27) du bac (13), l'individualisation complète des pâtons s'effectuant lors du contact cloisons séparatrices (15, 16) / fond (27) du bac (13).

2. Machine à former des pâtons selon la revendication précédente, **caractérisée en ce que** les moyens d'étalement contrôlés de la pâte consistent en une plaque de pression (14) plane destinée à exercer une pression uniforme sur la pâte (P) disposée dans le bac (13), associée à des moyens de détection d'une contre-pression appliquée à la plaque de pression (14) lors de son déplacement relatif par rapport au bac (13), les moyens de détection de la contre-pression provoquant l'arrêt du déplacement lorsqu'un seuil prédéterminé de contre-pression est atteint.

3. Machine à former des pâtons selon la revendication précédente, **caractérisée en ce que** le déplacement relatif bac (13) / plaque (14) est obtenu au moyen d'un moteur électrique (19), les moyens de détection consistant en la mesure du couple du moteur électrique, le déplacement étant arrêté lorsque le couple moteur subit une augmentation.

4. Machine à former des pâtons selon l'une quelconque des revendications précédentes, **caractérisée en ce que** les moyens de formage / individualisation consistent en des cloisons séparatrices (15, 16) parallèles dépassant d'une plaque et régulièrement espacés, à portion terminale (24) formant un bourrelet à section en forme de goutte.

5. Machine à former des pâtons selon la revendication précédente, **caractérisée en ce que** les cloisons séparatrices (15, 16) parallèles comportent une base d'allure parallélépipédique (23) reliée par des surfaces arrondies concaves à une paroi centrale (26) d'allure plus mince que la base (23) se terminant par un bourrelet (24) à section en goutte.

6. Machine à former des pâtons selon la revendication précédente, **caractérisée en ce que** l'extrémité libre du bourrelet (24) à section en goutte est dotée d'une arête de séparation des pâtons.

7. Machine à former des pâtons selon la revendication précédente, **caractérisée en ce que** ladite arête provient d'une lame (25) solidarisée à l'extrémité libre du bourrelet (24) à section en goutte.

8. Machine à former des pâtons selon l'une quelconque des revendications précédentes, **caractérisée en ce que** les moyens d'étalement contrôlés (14) de la pâte et les moyens de formage / individualisation (15, 16) des pâtons sont situés sur deux côtés d'un même bloc d'outils (10).

9. Machine à former des pâtons selon la revendication précédente, **caractérisée en ce que** le bloc d'outils (10) est mobile en rotation au-dessus du bac (13) de réception de la pâte (P).

10. Machine à former des pâtons selon l'une quelconque des revendications précédentes, **caractérisée en ce que** le bac de réception (13) est mobile en translation entre une première position à distance de l'ensemble d'outils (10) et une seconde position d'interaction avec celui-ci.

11. Machine à former des pâtons selon l'une quelconque des revendications précédentes, **caractérisée en ce que** le fond (27) du bac (13) est amovible.

12. Machine à former des pâtons selon l'une quelconque des revendications précédentes, **caractérisée en ce qu'**elle comporte un carter (2) de protection muni d'une fenêtre (4) donnant accès au bac de réception (13) de la pâte (P), ladite fenêtre (4) étant obturable par un volet (6).

13. Machine à former des pâtons selon la revendication précédente, **caractérisée en ce que** le volet (6) coopère avec un contact électrique de sécurité dont la position fermée correspond à la position d'obturation de la fenêtre (4) par le volet (6), et qui autorise l'activation des moyens d'entraînement (8, 19) de l'ensemble d'outils (10) d'une part, et du déplacement relatif bac (13) / ensemble d'outils (10) d'autre part.

14. Procédé de fabrication de pâtons en vue de les cuire dans un four pour obtenir du pain, à l'aide d'une machine selon les revendications précédentes, **caractérisé en ce qu'**il comprend les étapes suivantes :
- positionnement de l'ensemble d'outils (10) de sorte que les moyens d'étalement contrôlés (14) d'une masse de pâte (P) poussée disposée dans le bac de réception (13) soient au-dessus et en face du bac (13) ;
- application d'une pression contrôlée sur la masse de pâte (P) par déplacement relatif bac (13) / ensemble d'outils (10) en vue de les rapprocher, de manière à l'étaler en uniformisant son épaisseur tout en maintenant sensiblement constant son volume ;
- déplacement inverse en vue de séparer l'ensemble d'outils (10) du bac (13) ;
- mise en mouvement de l'ensemble d'outils (10) de sorte que les moyens de formage et d'individualisation (15, 16) soient amenés au-dessus et en face du bac (13) ;
- déplacement relatif ensemble d'outils (10) / bac (13) de sorte que les moyens de formage et d'individualisation (15, 16) des pâtons puissent être appliqués à la pâte (P) préalablement étalée ;
- déplacement inverse en vue de séparer l'ensemble d'outils (10) du bac (13).

15. Procédé de fabrication de pâtons selon la revendication précédente, **caractérisé en ce que** l'application de la pression contrôlée s'effectue par contrôle de l'existence d'une contre-pression exercée par la pâte (P), et arrêt des moyens d'étalement contrôlés dès détection d'une contre-pression.

16. Procédé de fabrication de pâtons selon la revendication précédente, **caractérisé en ce que** le bac (13) est entraîné par un moteur électrique (19) vers une plaque de pression (14), ledit moteur (19) étant arrêté dès détection d'une augmentation du couple moteur.

## Claims

1. A machine for forming shaped doughs from a leavened mass of dough (P) placed in a receiving tray (13), including a set of different tools (10) movable between several positions for actuating the various tools with view to applying them sequentially to the dough (P), the tray (13) and the whole of the tools (10) performing a relative movement respectively aiming at bringing them closer to each other/moving them away from each other,
**characterized in that** the set of tools (10) includes:
- controlled means (14) for spreading the dough (P) in the tray (13) aiming at uniformizing its thickness while substantially retaining its initial volume;
- means for forming/individualizing the dough (P) into distinct shaped doughs, provided with separating partitions (15, 16) defining between them housings for forming the shaped doughs during the relative displacement of the tool block (10)/tray (13) in the direction for bringing them closer to each other, resulting in the partitions (15, 16) being driven towards the bottom of the tray (13), the shape of said separating partitions (15, 16) in each housing being provided in order to gradually stretch an upper surface layer of the dough (P) and push back the dough remainder inside said the layer which closes gradually as the partitions (15, 16) come closer to the bottom (27) of the tray (13), the complete individualization of the shaped doughs being effected during the contact of the separating partitions (15, 16) with the bottom (27) of the tray (13).

2. The machine for forming shaped doughs according to the preceding claim, **characterized in that** the controlled means for spreading the dough consist in a planar pressure plate (14) intended to exert uniform pressure on the dough (P) positioned in the tray (13), associated with the means for detecting a counter-pressure applied to the pressure plate (14) during its relative displacement with respect to the tray (13), the means for detecting the counter-pressure causing stopping of the displacement when a predetermined counter-pressure threshold is reached.

3. The machine for forming shaped doughs according to the preceding claim, **characterized in that** the relative displacement of the tray (13)/plate (14) is obtained by means of an electric motor (19), the detection means consisting in measuring the torque of the electric motor, the displacements being stopped when the motor torque undergoes an increase.

4. The machine for forming shaped doughs according to any of the preceding claims, **characterized in that** the forming/individualization means consist in parallel separating partitions (15, 16) jutting out from a plate and regularly spaced out, with a terminal portion (24), forming a bulge with a drop-shaped section.

5. The machine for forming shaped doughs according to the preceding claim, **characterized in that** the parallel separating partitions (15, 16) include a base with a parallelepipedal aspect (23) connected through concave rounded surfaces to a central wall (26) with a thinner aspect than the base (23) ending with a drop-shaped bulge (24).

6. The machine for forming shaped doughs according to the preceding claim, **characterized in that** the free end of the drop-shaped bulge (24) is provided with an edge for separating the shaped doughs.

7. The machine for forming shaped doughs according to the preceding claim, **characterized in that** said edge stems from a blade (25) made integral with the free end of the drop-shaped bulge (24).

8. The machine for forming shaped doughs according to any of the preceding claims, **characterized in that** the controlled means (14) for spreading the dough and the means (15, 16) for forming/individualizing the shaped doughs are located on both sides of a same block of tools (10).

9. The machine for forming shaped doughs according to the preceding claim, **characterized in that** the block of tools (10) is rotationally movable above the tray (13) for receiving the dough (P).

10. The machine for forming shaped doughs according to any of the preceding claims, **characterized in that** the receiving tray (13) is translationally movable between a first position at a distance from the set of tools (10) and a second position for interacting with the latter.

11. The machine for forming shaped doughs according to any of the preceding claims, **characterized in that** the bottom (27) of the tray (13) is removable.

12. The machine for forming shaped doughs according to any of the preceding claims, **characterized in that** it includes a protective case (2) provided with a window (4) giving access to the tray (13) for receiving the dough (P), said window (4) being able to be obturated by a shutter (6).

13. The machine for forming shaped doughs according to the preceding claim, **characterized in that** the shutter (6) cooperates with an electric safety contact, the closed position of which corresponds to the position for obturating the window (4) with the shutter (6), and which allows actuation of the means (8, 19) for driving the set of tools (10) on the one hand, and for relatively displacing the tray (13)/set of tools (10) on the other hand.

14. A method for making shaped doughs with view to baking them in an oven for obtaining bread, with a machine according to the preceding claims, **characterized in that** it comprises the following steps:
- positioning the set of tools (10) so that the controlled means (14) for spreading out a leavened dough mass (P) positioned in the receiving tray (13) are above and opposite to the tray (13);
- applying controlled pressure on the dough mass (P) by relative displacement of the tray (13)/set of tools (10) with view to bringing them closer, in order to spread it out by uniformizing its thickness while maintaining its volume substantially constant;
- reverse displacement with view to separating the set of tools (10) from the tray (13);
- setting the set of tools (10) into motion so that the forming and individualization means (15, 16) are brought above and opposite to the tray (13);
- relatively displacing the set of tools (10)/tray (13) so that the means (15, 16) for forming and individualizing the shaped doughs may be applied to the dough (P) spread out beforehand;
- reverse displacement with view to separating the set of tools (10) from the tray (13).

15. The method for manufacturing shaped doughs according to the preceding claim, **characterized in that** the application of the controlled pressure is effected by checking for the existence of a counter-pressure exerted by the dough (P) and stopping the controlled spreading means as soon as a counter-pressure is detected.

16. The method for manufacturing shaped doughs according to the preceding claim, **characterized in that** the tray (13) is driven by an electric motor (19) towards a pressure plate (14), said motor (19) being stopped as soon as an increase in the motor torque is detected.

## Patentansprüche

1. Maschine zum Formen von Teiglingen aus einer gegangenen, in einen Aufnahmebehälter (13) platzierten Teigmasse (P), die zur Aktivierung der verschiedenen Werkzeuge, um diese sequenziell auf den Teig (P) anzuwenden, eine zwischen mehreren Positionen bewegbare Werkzeuggruppe (10) umfasst, wobei der Behälter (13) und die Werkzeuggruppe (10) in eine relative Bewegung versetzt werden, die darauf abzielt, sie jeweils anzunähern / zu entfernen,
**dadurch gekennzeichnet, dass** die Werkzeuggruppe (10) aufweist:
- gesteuerte Ausbreitungsmittel (14) des Teigs (P) in dem Behälter (13), die darauf abzielen, seine Dicke bei etwaiger Beibehaltung seines Ausgangsvolumens zu vereinheitlichen,
- Mittel zum Formen / Individualisieren des Teigs (P) in unterschiedliche Teiglinge, die mit Trennwänden (15, 16) ausgestattet sind, die zwischen sich Aufnahmen zum Formen der Teiglinge während der relativen Verschiebung Werkzeugblock (10) / Behälter (13) in Richtung Annäherung definieren, was dazu führt, dass die Trennwände (15, 16) in Richtung Boden des Behälters (13) geführt werden, wobei die Form der Trennwände (15, 16) in jeder Aufnahme dazu vorgesehen ist, schrittweise eine obere Oberflächenschicht des Teigs (P) zu ziehen und den Rest des Teigs in die Schicht zurückzugeben, die sich wieder schließt, je mehr sich die Trennwände (15, 16) dem Boden (27) des Behälters (13) nähern, wobei die vollständige Individualisierung der Teiglinge während des Kontakts Trennwände (15,16) / Boden (27) des Behälters (13) erfolgt.

2. Maschine zum Formen von Teiglingen nach vorangehendem Anspruch, **dadurch gekennzeichnet, dass** die gesteuerten Ausbreitungsmittel des Teigs aus einer ebenen Druckplatte (14) bestehen, die dazu bestimmt ist, einen gleichmäßigen Druck auf den in dem Behälter (13) angeordneten Teig (P) auszuüben, kombiniert mit Detektionsmitteln eines auf die Druckplatte (14) bei ihrer relativen Verschiebung im Verhältnis zum Behälter (13) ausgeübten Gegendrucks, wobei die Gegendruck-Detektionsmittel das Anhalten der Verschiebung bewirken, wenn eine vorbestimmte Gegendruckschwelle erreicht ist.

3. Maschine zum Formen von Teiglingen nach vorangehendem Anspruch, **dadurch gekennzeichnet, dass** die relative Verschiebung Behälter (13) / Platte (14) von einem Elektromotor (19) erzeugt wird, wobei die Detektionsmittel im Messen des Moments des Elektromotors bestehen, wobei die Verschiebung angehalten wird, wenn sich das Motormoment erhöht.

4. Maschine zum Formen von Teiglingen nach einem der vorangehenden Ansprüche, **dadurch gekennzeichnet, dass** die Mittel zum Formen / Individualisieren aus parallelen Trennwänden (15, 16) bestehen, die über eine Platte hinausreichen und gleichmäßig beabstandet sind, mit Endabschnitt (24), der eine Wulst mit tropfenförmigem Querschnitt bildet.

5. Maschine zum Formen von Teiglingen nach vorangehendem Anspruch, **dadurch gekennzeichnet, dass** die parallelen Trennwände (15, 16) eine parallelepipedische Basis (23) aufweisen, die durch konkave abgerundete Flächen mit einer zentralen Wand (26), die schlanker als die Basis (23) ist, verbunden ist, wobei sie in einer Wulst (24) mit tropfenförmigem Querschnitt enden.

6. Maschine zum Formen von Teiglingen nach einem der vorangehenden Ansprüche, **dadurch gekennzeichnet, dass** das freie Ende der Wulst (24) mit tropfenförmigem Querschnitt mit einem Schneide zum Trennen der Teiglinge ausgestattet ist.

7. Maschine zum Formen von Teiglingen nach einem der vorangehenden Ansprüche, **dadurch gekennzeichnet, dass** sich die Schneide aus einer Klinge (25) entwickelt, die mit dem freien Ende der Wulst (24) mit tropfenförmigem Querschnitt verbunden ist.

8. Maschine zum Formen von Teiglingen nach einem der vorangehenden Ansprüche, **dadurch gekennzeichnet, dass** sich die gesteuerten Ausbreitungsmittel (14) des Teigs und die Mittel zum Formen / Individualisieren (15, 16) der Teiglinge auf zwei Seiten ein und desselben Werkzeugblocks (10) befinden.

9. Maschine zum Formen von Teiglingen nach vorangehendem Anspruch, **dadurch gekennzeichnet, dass** der Werkzeugblock (10) über dem Behälter (13) zur Aufnahme des Teigs (P) rotierend beweglich ist.

10. Maschine zum Formen von Teiglingen nach einem der vorangehenden Ansprüche, **dadurch gekennzeichnet, dass** der Aufnahmebehälter (13) zwischen einer ersten, vom Werkzeuggruppe (10) entfernten Position und einer zweiten Interaktionsposition mit diesem verschiebend beweglich ist.

11. Maschine zum Formen von Teiglingen nach einem der vorangehenden Ansprüche, **dadurch gekennzeichnet, dass** der Boden (27) des Behälters (13) abnehmbar ist.

12. Maschine zum Formen von Teiglingen nach einem der vorangehenden Ansprüche, **dadurch gekennzeichnet, dass** sie ein mit einem Fenster (4) ausgestattetes Schutzgehäuse (2) aufweist, das Zugriff auf den Aufnahmebehälter (13) des Teigs (P) gibt, wobei das Fenster (4) von einer Klappe (6) verschließbar ist.

13. Maschine zum Formen von Teiglingen nach vorangehendem Anspruch, **dadurch gekennzeichnet, dass** die Klappe (6) mit einem elektrischen Sicherheitskontakt zusammenarbeitet, dessen geschlossene Position der Verschlussposition des Fensters (4) durch die Klappe (6) entspricht und der die Aktivierung der Antriebsmittel (8, 19) der Werkzeuggruppe (10) einerseits und der relativen Verschiebung Behälter (13) / Werkzeuggruppe (10) andererseits genehmigt.

14. Verfahren zur Herstellung von Teiglingen zum Backen in einem Ofen zur Herstellung von Brot mit Hilfe einer Maschine nach vorangehenden Ansprüchen, **dadurch gekennzeichnet, dass** es die folgenden Schritte umfasst:
- Positionierung der Werkzeuggruppe (10) derart, dass sich die gesteuerten Ausbreitungsmittel (14) einer Masse gegangenen, im Aufnahmebehälter (13) angeordneten Teigs (P) über und gegenüber dem Behälter (13) befinden,
- Anwendung eines gesteuerten Drucks auf die Masse Teigs (P) durch relative Verschiebung Behälter (13) / Werkzeuggruppe (10) zwecks ihrer Annäherung, um ihn durch Vereinheitlichung seiner Dicke bei etwaiger konstanter Beibehaltung seines Volumens auszubreiten,
- umgekehrte Verschiebung zwecks Trennen der Werkzeuggruppe (10) vom Behälter (13),
- Bewegung der Werkzeuggruppe (10) derart, dass die Mittel zum Formen und Individualisieren (15, 16) über und gegenüber dem Behälter (13) geführt werden,
- relative Verschiebung Werkzeuggruppe (10) / Behälter (13) derart, dass die Mittel zum Formen und Individualisieren (15, 16) der Teiglinge auf den zuvor ausgebreiteten Teig (P) angewendet werden können,
- umgekehrte Verschiebung zur Trennung der Werkzeuggruppe (10) vom Behälter (13).

15. Verfahren zur Herstellung von Teiglingen nach vorangehendem Anspruch, **dadurch gekennzeichnet, dass** die Anwendung des gesteuerten Drucks durch Kontrolle des Vorhandenseins eines von dem Teig (P) ausgeübten Gegendrucks durchgeführt wird und Anhalten der gesteuerten Ausbreitungsmittel ab Detektion eines Gegendrucks.

16. Verfahren zum Formen von Teiglingen nach vorangehendem Anspruch, **dadurch gekennzeichnet, dass** der Behälter (13) von einem Elektromotor (19) in Richtung einer Druckplatte (14) angetrieben wird, wobei der Motor (19) ab Detektion einer Erhöhung des Motormoments angehalten wird.
